# EUROPEAN PATENT APPLICATION

(11) **EP 4 269 175 A1**
(43) Date of publication of application: **01.11.2023**
(21) Application number: 22170534.6
(22) Date of filing: 28.04.2022
(51) Int. Cl.: B60R 11/04, B29C 65/48, B29C 65/00, F16B 11/00, F16B 47/00

(54) **A MOUNTING BRACKET AND A VEHICLE CAMERA ARRANGEMENT**

(71) Applicant: Veoneer Sweden AB, 447 37 Vårgårda (SE)
(72) Inventor: ROSENLUND, Erik, Vårgårda (SE)
(74) Representative: Westpatent AB

(57) **Abstract**

The present disclosure relates to a mounting bracket (200) adapted to be mounted to a receiving surface (11) and comprising an attachment surface (201) that is adapted to face the receiving surface (11) and an inner surface (202) that is opposite the attachment surface (201). The mounting bracket (200) comprises a plurality of through-holes (210) which run from the attachment surface (201) towards the inner surface (202). Each through-hole (210) has a varying largest inner width that has a smallest value between the attachment surface (201) and the inner surface (202).

## Description

The present disclosure relates to a mounting bracket, such as a camera mounting bracket, and a vehicle camera arrangement that comprises a vehicle camera module and the camera mounting bracket.

Many vehicle environment detection systems comprise one or more sensors such as for example radar sensor, LIDAR sensors, ultrasonic sensors and digital camera devices. These are used for collecting data used for safety arrangements as well as for driver assistance systems. A camera device is adapted to collect images of the surroundings, and may be used to identify landmarks.

For a digital camera device, that can be in the form of, or comprised in, a vehicle imaging system, a camera module is mounted to a camera mounting bracket that in turn is mounted to an interior part of the vehicle, such as a vehicle windshield as described in US 10173608 and US 2018154842. In these documents, the camera mounting bracket is integrated with a light-trap arrangement that is adapted to limit incoming light. The camera module may for example comprises a housing, a lens assembly and a PCB to which an image sensor and associated components are mounted.

The camera mounting bracket is often glued to the vehicle windshield, and in order to ensure a sufficient adhesion, the camera mounting bracket has to be pre-coated with an adhesion coating before resin is added. This pre-coating results in more handling and material, which of course increases production cost. It is therefore desired to ensure a sufficient adhesion of the resin to the camera mounting bracket without the need for the adhesion coating.

The above is for any bracket that is adapted to be attached to a surface by means of resin.

It is an object of the present disclosure to provide means for a secure, efficient and reliable gluing of a bracket to a surface, such as a vehicle windshield, without the need for any additional material or compositions.

Said object is achieved by means of a mounting bracket adapted to be mounted to a receiving surface and comprising an attachment surface that is adapted to face the receiving surface and an inner surface that is opposite the attachment surface. The mounting bracket comprises a plurality of through-holes which run from the attachment surface towards the inner surface. Each through-hole has a varying largest inner width that has a smallest value between the attachment surface and the inner surface.

This means that each through-hole is adapted to constitute an anchor for resin that has been dispensed into the through hole, when the resin has hardened. The resin will then be held in the aperture due to its shape and no pre-coating with an adhesion coating will be needed.

According to some aspects, each through-hole comprises a first part and a second part which are separated by a through-hole choke having a largest choke width that falls below a largest width of the first part, constituting a first part largest width, and a largest width of the second part, constituting a largest second part width. The largest first part width is closer to the attachment surface than the largest choke width, and the largest second part width is closer to the inner surface than the largest choke width.

This shape is adapted to provide a reliable anchor for hardened resin that has been dispensed into the through hole.

According to some aspects, the largest first part width decreases continuously to the largest choke width.

According to some aspects, the largest second part width decreases continuously to the largest choke width.

This shape provides a reliable adhesion to the walls of the through-hole for hardened resin that has been dispensed into the through-hole.

According to some aspects, the largest first part width is positioned in the attachment surface.

According to some aspects, the largest second part width is positioned in the inner surface.

According to some aspects, the through-holes have at least one of cross-section shapes
- circular,
- rectangular,
- square,
- oval and
- polygonal.

This means that the through-hole can be formed in many ways within the scope of the present disclosure, always being adapted to confer the anchor function for hardened resin as described above.

According to some aspects, the mounting bracket is a camera mounting bracket that is adapted to be mounted to a vehicle windshield, where the attachment surface is adapted to face the vehicle windshield.

This means that the mounting bracket can be comprised in a vehicle camera arrangement.

The present disclosure also relates to methods, and vehicle camera arrangements that are associated with the above advantages.

### BRIEF DESCRIPTION OF THE DRAWINGS

The present disclosure will now be described more in detail with reference to the appended drawings, where:
- Figure 1: shows a schematic cut-open part of a vehicle with a camera device;
- Figure 2: shows a schematic perspective front view of a vehicle camera arrangement;
- Figure 3: shows a schematic view of a part of a camera mounting bracket seen against an attachment surface;
- Figure 4: shows a cross-section of Figure 3;
- Figure 5: shows a schematic cut-open side view of one through-hole;
- Figure 6: shows the through-hole of Figure 5 with resin added;
- Figure 7: shows the through-hole of Figure 6 pressed against a vehicle windshield;
- Figure 8: shows a schematic cut-open side view of one through-hole, illustrating different through-hole shapes; and
- Figure 9: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

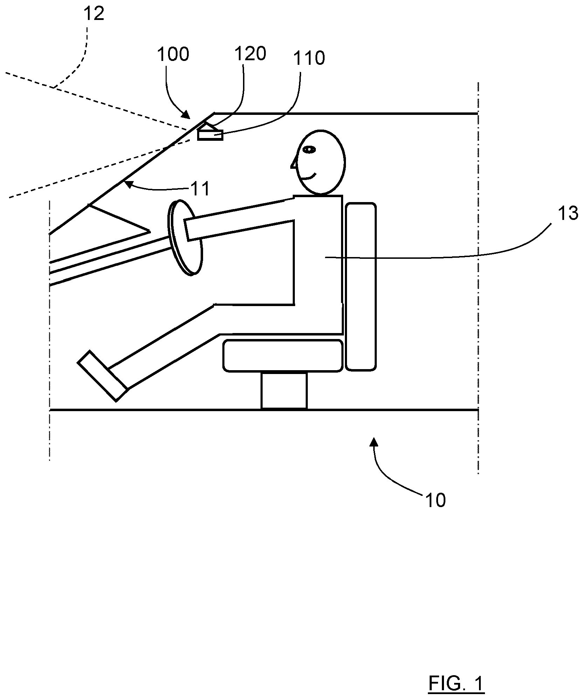

Figure 1 schematically shows a cut-open part of a vehicle 10, where the vehicle 10 comprises a vehicle camera arrangement 100 attached to a vehicle windscreen 11. The vehicle camera arrangement 100 is arranged for capturing images of the surroundings outside the vehicle 10 by means of a certain field of view 12. The vehicle camera arrangement 100 can also, or alternatively, be arranged for capturing images of a driver 13, where these images, which may include eye movements, for example can be used for detecting a degree of driver drowsiness. In the example described, the vehicle camera arrangement 100 is arranged for capturing images of the surroundings outside the vehicle 10.

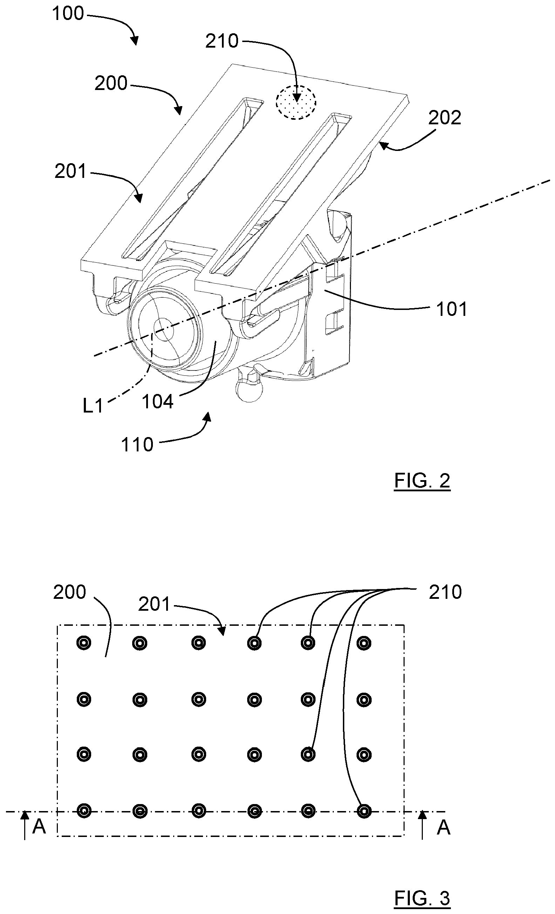

With reference also to Figure 2, that shows a schematic perspective front view of a vehicle camera arrangement 100, the vehicle camera arrangement 100 comprises a vehicle camera module 110 and a camera mounting bracket 200, and the present disclosure is directed to the vehicle camera arrangement 100 as well as to the camera mounting bracket 200 separately, and in particular to a general mounting bracket 200 which will be discussed more in detail below.

The camera mounting bracket 200 comprises two main sides with respective surfaces, an attachment surface 201 that is adapted to face the vehicle windshield 11 and an inner surface 202 that is adapted to face the camera module 110 and is opposite the attachment surface 201.

The vehicle camera module 110 comprises a housing 101 and a lens assembly 104 that at least partly is accommodated in the housing 101, where the lens assembly 104 extends along a first extension L1 and comprises a lens through-hole 105 that is adapted to face the vehicle windscreen 11. The housing 101 comprises further parts that are used in a vehicle camera module 110 such as for example an image sensor with associated electronic circuits and interfaces.

According to some aspects, the vehicle camera module 110 is releasably attachable to the camera mounting bracket 200.

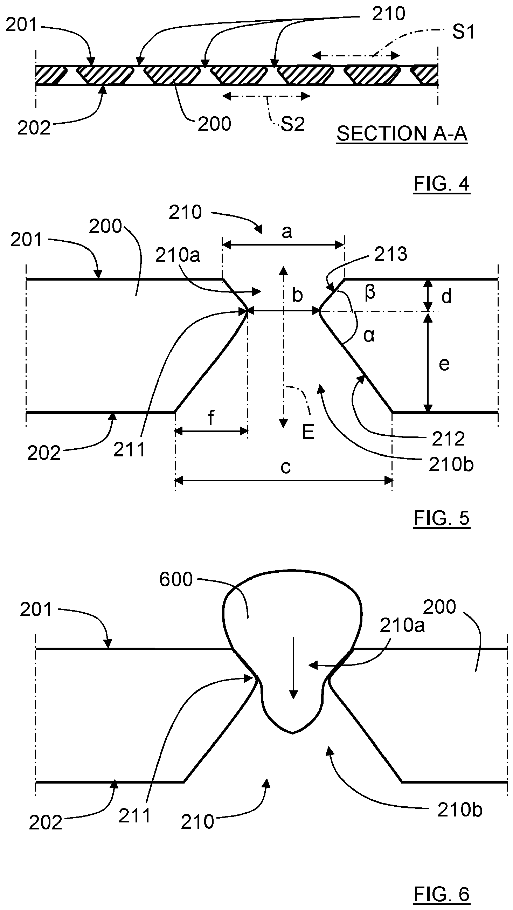

The vehicle camera arrangement 100 is shown attached to the vehicle windscreen 11 via the camera mounting bracket 200 by means of an adhesive in the form of resin that has been applied to the attachment surface 201. This will be described more in detail below with reference also to Figure 3 and Figure 4.

Figure 3 shows a part of the camera mounting bracket 200 seen against the attachment surface 201, and Figure 4 shows a section of Figure 3.

It should be noted, that generally the camera mounting bracket 200 can be any suitable mounting bracket 200 adapted to be mounted to a receiving surface 11 and comprising an attachment surface 201 that is adapted to face the receiving surface 11 and an inner surface 202 that is opposite the attachment surface 201. The mounting bracket 200 can thus be adapted for other purposes than as a camera mounting bracket, and the vehicle windshield 11 can be any suitable receiving surface 11. The present disclosure therefore relates to a mounting bracket 200.

According to the present disclosure, the mounting bracket 200, such as a camera mounting bracket 200 according to the above, comprises a plurality of through-holes 210 which run from the attachment surface 201 towards the inner surface 202. The through-holes 210 here have a circular cross-section shape, but other cross-section shapes are of course conceivable, such as for example rectangular, square, oval and polygonal cross-section shapes. Two or more different shapes and/or sizes may be combined for one and the same camera mounting bracket 200. The through-holes 210 are only schematically depicted in Figure 2, and only a few through-holes 210 are indicated in Figure 3 and Figure 4, all for reasons of clarity.

Figure 5 shows a cut-open side view of one through-hole 210 more in detail, each through-hole 210 has a varying largest inner width that has a smallest value between the attachment surface 201 and the inner surface 202. This means that each through-hole is adapted to constitute an anchor for resin that has been dispensed into the through hole, when the resin has hardened. The resin will then be held in the aperture due to its shape and no pre-coating with an adhesion coating will be needed.

According to some aspects, each through-hole comprises a first part 210a and a second part 210b which are separated by a through-hole choke 211 having a largest choke width b that falls below a largest width a of the first part 210a, constituting a first part largest width 2, and a largest width c of the second part 210b, constituting a largest second part width c.

This shape is adapted to provide a reliable anchor for hardened resin that has been dispensed into the through hole.

According to some aspects, the widths are measured parallel to a main extension S1, S2 of at least one of the surfaces 201, 202, according to some aspects the surfaces 201, 202 run parallel to each other. According to some aspects, the widths are measured perpendicular to a main extension E of each through-hole 210. Such a main extension E of each through-hole 210 does not need to be perpendicular to a main extension S1, S2 of a surface 201, 202.

The largest first part width a is closer to the attachment surface 201 than the largest choke width b, and the largest second part width c is closer to the inner surface 202 than the largest choke width b.

This means that the portion of the through-hole 210 that can act as an anchor is larger than the rest of the through-hole 210.

When each through-hole 210 is referred to, it means each through-hole 210 in the plurality of through-holes 210. The mounting bracket 200 may comprise other through-holes that are not comprised in the plurality of through-holes 210.

According to some aspects, the largest first part width a decreases continuously to the largest choke width b. According to some further aspects, the largest second part width c decreases continuously to the largest choke width b. According to some aspects, this means that the through-holes have convergent-divergent nozzle-like shape, like an hourglass.

This provides a reliable adhesion to the walls of the through-hole 210 for hardened resin that has been dispensed into the through-hole 210.

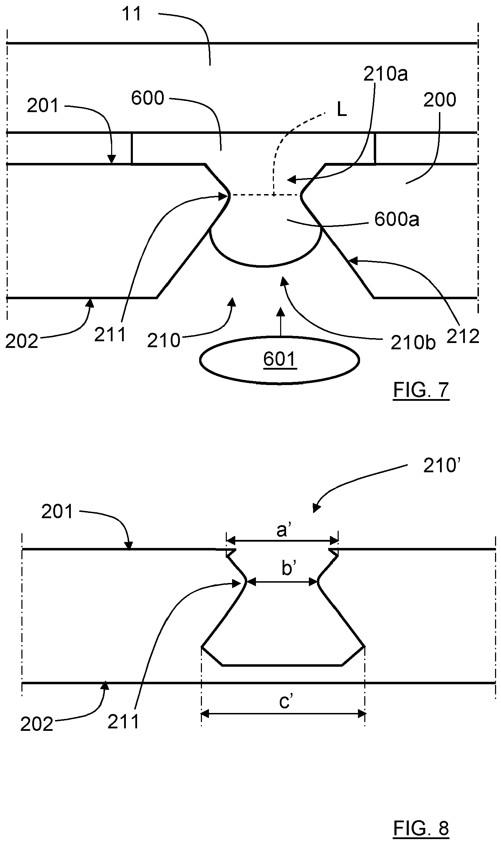

According to some aspects, the largest first part width a is positioned in the attachment surface 201. According to some further aspects, the largest second part width b is positioned in the inner surface 202. This is of course not necessary as illustrated for an alternative through-hole 210' in Figure 8. Here, different options are illustrated that can be combined or implemented individually.
- The largest first part width a' is positioned a certain distance from the attachment surface 201 towards the through-hole choke 211.
- The largest second part width c' is positioned a certain distance from the inner surface 202 towards the through-hole choke 211.
- The through-hole 210' does not run through the inner surface 202.

It is to be noted that these options are non-binding examples, many other alternatives also exist.

This means that the through-hole can be formed in many ways within the scope of the present disclosure, always being adapted to confer the anchor function for hardened resin as described above.

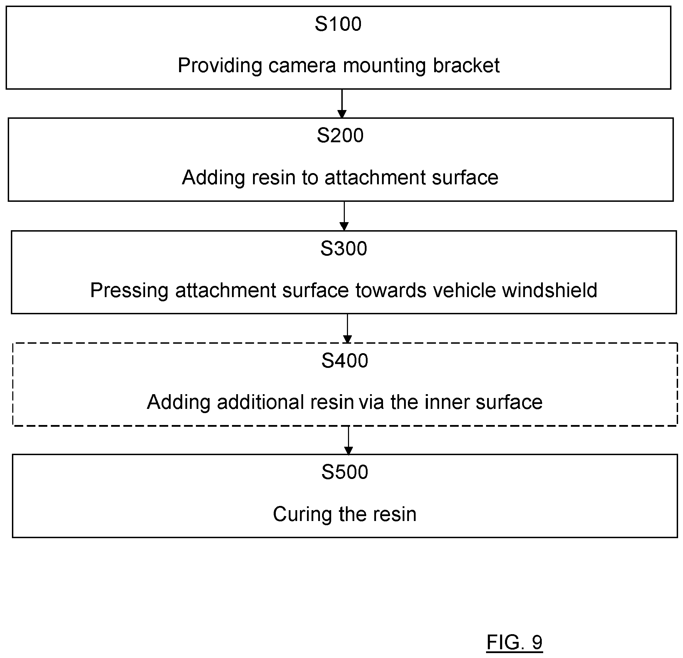

With reference to Figure 6, Figure 7 and Figure 9, the present disclosure also relates to a mounting method for mounting a mounting bracket 200 according to the above to a receiving surface 11, according to some aspects mounting the vehicle mounting bracket 200 to a vehicle windshield 11.

The method comprises providing S100 a mounting bracket 200 according to the above and adding S200 resin 600 to the attachment surface 201 such that the resin 600 flows into the through-hole 210. This is illustrated for one through-hole 210 in Figure 6, where resin 600 is positioned on the attachment side 201 and flows into the through-hole 210. Here a limited amount of resin is shown for the specific through-hole 210 in order to illustrate the present disclosure, but, according to some aspects, in practice resin can be added as a layer over a at least a main part of the attachment side 201.

The method further comprises pressing S300 the attachment surface 201 towards the receiving surface 11 such that the resin 600 flows further into the through-holes 210, passing the respective through-hole choke 211, and curing S500 the resin 600 such that it is hardened. For each through-hole 210 that has received a sufficient amount of resin 600, the part of the resin 600 that has passed the through-hole choke 211 will have continued into the second part 110b and attached itself to a respective second part wall 212 (or walls depending on through-hole shape) such that a holding part 600a of the hardened resin 600 cannot return via the through-hole choke 211 due the mushroom-shape of the holding part 600a of the resin 600 that has passed the through-hole choke 211 into the second part 210b of the through-hole 210. The holding part 600a thus acts as an anchor for the resin 600.

The cured resin 600 is of such a composition that it attaches firmly to the receiving surface 11, in this example the vehicle windshield.

According to some aspects, the method comprises adding S400 additional resin 601 to the through-holes 210 via the inner surface 202 into the second part 210b such that the holding part 600a becomes larger and will provide a more reliable mounting, locking the holding part 600a in position. In this case, the through-hole 210 will of course have to be accessible from the inner surface 202. Adding S400 additional resin 601 to the through-holes 210 via the inner surface 202 can be performed before or after curing S500.

Larger through-holes 210 will enable individual portions of resin to be added from the attachment surface 201 and/or from the inner surface 202. Smaller through-holes 210 ae more suitable for a layer of resin being added as mentioned above.

As mentioned previously, according to some aspects, the mounting bracket 200 is a camera mounting bracket 200 that is adapted to be mounted to a vehicle windshield 11, where the attachment surface 201 is adapted to face the vehicle windshield 11.

This means that the mounting bracket can be comprised in a vehicle camera arrangement.

According to some aspects, as indicated in Figure 5, the through-hole choke 211 is positioned so as to create a first chamfer at a first part wall 213 in the first part 210a having a first chamfer angle β with respect to the attachment surface 201, to increase the amount of resin 600 that will be pressed thru the through-hole choke 211 when the attachment surface 201 is pressed towards the vehicle windshield 11. This position is indicated by a shortest first distance d between the through-hole choke 211 and the attachment surface 201, and a second shortest distance e between the through-hole choke 211 and the inner surface 202.

The first chamfer to locking surface ratio, the first distance d versus the second distance e, is not set and could in certain scenarios differ from the one shown above depending on variables including, but not being limited to, resin type and temperature. The same is also true for the relation between the largest first part width a, the first distance d and the second distance e.

According to some aspects, the through-hole choke 211 is also positioned so as to create a second chamfer in the second part 210b having a second chamfer angle α with respect to the inner surface 202, the second chamfer angle α being chosen sufficiently large while still maintaining an overhang f that provides a desired locking effect. The minimum second chamfer angle α that is needed is depending on variables including, but not being limited to, resin surface tension, resin viscosity and surface porosity.

For example if the second chamfer angle α is too small, the resin would not be able to keep the connection to the second part wall 212 during assembly. If, for example, the chamfer angle α equals zero, the locking effect would be severely limited due to the failure of the resin to hang on to the second part wall 212.

The present disclosure is not limited to the examples above, but may vary freely within the scope of the appended claims. For example, it is evident that there can be many different types of camera mounting bracket 200 that work in different ways that can be sued for the present disclosure. For example, the vehicle camera module 110 and the camera mounting bracket 200 may form the vehicle camera arrangement 100 as one integrated unit.

With reference to Figure 1, the vehicle camera module 110 may be of any suitable kind and comprises a power assembly, an interface assembly and a control unit, which all are positioned at and/or within the housing 101.

According to some aspects, the resin can be any suitable glue compound that can cure and provide proper adhesion.

## Claims

1. A mounting bracket (200) adapted to be mounted to a receiving surface (11) and comprising an attachment surface (201) that is adapted to face the receiving surface (11) and an inner surface (202) that is opposite the attachment surface (201), **characterized in that** the mounting bracket (200) comprises a plurality of through-holes (210) which run from the attachment surface (201) towards the inner surface (202), where each through-hole (210) has a varying largest inner width that has a smallest value between the attachment surface (201) and the inner surface (202).

2. The mounting bracket (200) according to claim 1, wherein each through-hole (210) comprises a first part (210a) and a second part (210b) which are separated by a through-hole choke (211) having a largest choke width (b) that falls below a largest width (a) of the first part (210a), constituting a first part largest width (a), and a largest width (c) of the second part (210b), constituting a largest second part width (c), where the largest first part width (a) is closer to the attachment surface (201) than the largest choke width (b), and the largest second part width (c) is closer to the inner surface (202) than the largest choke width (b).

3. The mounting bracket (200) according to any one of the claims 1 or 2, wherein the largest first part width (a) decreases continuously to the largest choke width (b).

4. The mounting bracket (200) according to any one of the previous claims, wherein the largest second part width (c) decreases continuously to the largest choke width (b).

5. The mounting bracket (200) according to any one of the previous claims, wherein the largest first part width (a) is positioned in the attachment surface (201).

6. The mounting bracket (200) according to any one of the previous claims, wherein the largest second part width (b) is positioned in the inner surface (202).

7. The mounting bracket (200) according to any one of the previous claims, wherein the through-holes (210) have at least one of cross-section shapes
- circular,
- rectangular,
- square,
- oval and
- polygonal.

8. The mounting bracket (200) according to any one of the previous claims, wherein the mounting bracket (200) is a camera mounting bracket (200) that is adapted to be mounted to a vehicle windshield (11), where the attachment surface (201) is adapted to face the vehicle windshield (11).

9. A method for mounting a mounting bracket (200) according to any one of the claims 1-6 to a receiving surface (11), the method comprising
providing (S100) the mounting bracket;
adding (S200) resin (600) to the attachment surface (201) such that the resin (600) flows into the through-holes (210) ;
pressing (S300) the attachment surface (201) towards the receiving surface (11) such that the resin (600) flows further into the through-holes (210), passing the respective through-hole choke (211), and
curing (S500) the resin (600) such that it is hardened.

10. The method according to claim 9, comprising
adding (S400) additional resin (601) to the through-holes (210) via the inner surface 202 into the second part 210b.

11. The method according to any one of the claims 9 or 10, wherein the mounting bracket (200) is a camera mounting bracket (200) that is adapted to be mounted to a vehicle windshield (11), where the attachment surface (201) is adapted to face the vehicle windshield (11).

12. A vehicle camera arrangement (100) comprising the camera mounting bracket (200) according to claim 8 and a vehicle camera module (110), where the vehicle camera module (110) comprises a housing (101) and a lens assembly (104) that at least partly is accommodated in the housing (101), where the lens assembly (104) extends along a first extension (L1) and comprises a lens through-hole (105) that is adapted to face a vehicle windscreen (11).

13. The vehicle camera arrangement (100) according to claim 12, wherein the vehicle camera module (110) is releasably attachable to the camera mounting bracket (200).
